# EUROPEAN PATENT APPLICATION

(11) **EP 4 600 088 A1**
(43) Date of publication of application: **13.08.2025**
(21) Application number: 24156352.7
(22) Date of filing: 07.02.2024
(51) Int. Cl.: B60Q 1/04, B60Q 1/26

(54) **VEHICLE LAMP WITH A TOLERANCE-COMPENSATION ATTACHMENT MECHANISM**

(71) Applicant: Hella Autotechnik Nova s.r.o., 78985 Mohelnice (CZ)
(72) Inventor: Foldyna, Jiri, 73946 Hukvaldy (CZ)
(74) Representative: Behr-Wenning, Gregor

(57) **Abstract**

Vehicle lamp (1) which comprises a casing (3) which comprises at least one tolerance-compensation attachment mechanism (2). The attachment mechanism (2) comprises a fixed holder (4) for a nut (5) fixedly connected to the casing (3) and comprises a moveable holder (6) for a nut (5) connected to the casing (3) via two connection elements. These elements are moveably connected to each other, such that they define a non-rotatable translation movement in a single movement axis (9). The holders are aligned in a common attachment axis (10) parallel to the movement axis (9). The moveable holder (6) comprises a contact surface (12) for contacting a part (13) of the vehicle during rotation of a bolt (11) engaging the nut (5) in the moveable holder (4).

## Description

### Technical field

The present invention relates to lamps for vehicles, especially to headlights and taillights for automobiles. Specifically, it relates to lamps having at least one attachment mechanism which can connect the lamp to the vehicle with a bolt at different distances such that previous centering of the lamp is not disrupted by tightening of the bolt.

### Background of the Invention

Exterior vehicle lamps, especially headlight and taillights, are most commonly attached to vehicles using bolt connections. Since lamps are one of the most visible parts of vehicles, there is a great emphasis placed on their precise positioning. Usually, there are at least three bolt connections, and each lamp can to some extent be positioned individually so that it can be properly aligned with surrounding components (car body, front grille etc.) despite any potential manufacturing tolerances and imprecisions.

Oftentimes, further connection of a given lamp to a vehicle is needed to properly secure the lamp. If the lamp is already properly aligned, this further connection should not move the lamp while it is being tightened. Tolerance-compensating attachment mechanisms, i.e., bolt connections which can be tightened between two aligned components without misaligning them, are known in the state of the art, and they can be used for securing vehicle lamps without affecting their position. Examples of such mechanisms are described in documents EP1764516, DE102004044055 or DE102007037242.

Tolerance-compensating mechanisms known from the art have several disadvantages - they are relatively complicated and can thus be expensive; they are not sturdy enough to sufficiently secure vehicle lamps; and it is sometimes necessary to secure a part of the mechanism to the vehicle beforehand, which complicates mounting.

It would therefore be advantageous to provide a new tolerance-compensating mechanism which could be used to firmly secure a vehicle lamp to a vehicle, and which would be easier to use and/or cheaper to manufacture.

### Summary of the Invention

The shortcomings of the solutions known in the prior art are to some extent eliminated by a vehicle lamp with a tolerance-compensation attachment mechanism. The lamp comprises a casing for mounting the lamp to a vehicle. The casing (e.g., a frame) is the main structural component of the lamp, which can carry and/or encapsulate any or all of other components which can be a part of the lamp, such as illumination modules, light sources, optical components (lens, reflectors, shades etc.), electronical components (sensors, wirings, PCBs, fans, actuators etc.), mechanical components (lens-holders, further frames or casings etc.) and/or any further components known to skilled persons and included in any vehicle lamps in the state of the art.

The casing comprises at least one attachment mechanism for attaching the lamp to the vehicle and for compensating tolerance(s) in one axis. The attachment mechanism comprises a fixed holder for a nut and a moveable holder for a nut. The holders can by any components from any materials usable for carrying and holding a nut for a bolt. Plastic or metallic holders comprising an opening, where the respective nut can be placed inside of or next to the opening, such that a bolt can pass through the opening and through the nut, can be used. Preferably, each holder is a bracket with an opening, wherein there is a wider part of the opening for receiving a nut. The wider part can for example have hexagonal cross-section for keeping the nut from rotating. The nut can be pressed into the holder, glued or welded, merely inserted through an open side wall of the opening etc.

In some variants of the invention, the nut can be formed as an inseparable part of the holder, e.g., the holder can be metal bracket with an inner thread provided to a hole in the bracket and forming the nut - this variant could complicate replacing of the nut but could simplify manufacture or make it cheaper. Any other way of forming any of the nut holders can be used in the invention. A nut can be any component with an inner thread usable for threaded engagement with a bolt. The holders and/or the nuts are preferably formed and arranged such that the nuts cannot rotate in the holders.

The fixed holder is fixedly connected to the casing. Any way of fixing can be used, e.g., screwing, riveting, gluing, welding, snap-in fitting etc. The fixed holder can be made as an inseparable part of the casing, e.g. the casing or a part thereof can be injection molded or pressure-formed and the fixed holder can be made from the same piece of material during the molding/forming. Making the fixed holder from the same piece of material as (a part of) the casing can be advantageous because in reduces manufacturing complexity and cost.

The moveable holder is connected to the casing via two connection elements such that it can move relative to the fixed holder and thus the casing. This movement is a translation movement in one axis, e.g., the moveable holder can be shifted up and down, but it cannot be moved or rotated relative to the fixed holder in any other axis. The two connection elements together form a mechanism which delimits the movement of the moveable holder. A first connection element is fixedly connected to the casing and a second connection element is fixedly connected to the moveable holder. The first connection element and the second connection element are moveably connected to each other, such that they define a non-rotatable translation movement in a single movement axis.

The connection elements can for example form a linear bearing - sliding bearing, ball bearing etc. The movement can thus be sliding as well as rolling movement. The elements can include a groove with a complementary protrusion slideably attached in the groove, they can include two or more telescopic elements, they can include a rod slideably attached in a complementary opening, they can include wheels and a track for the wheels etc. Any mechanism usable for delimiting linear translational movement can be used. The first and second connection elements can be interchangeable, e.g., if the first element is a groove and the second element is a complementary protrusion, in another variant of the invention the first element can be a protrusion and the second element can be a complementary groove, and analogously for other types of translational mechanisms.

The length of this movement can by chosen as needed for any application and can easily by modified by extending the elements. For example, the range of movement of the moveable holder can be between 1 and 10 centimeters. Each of the connection elements can be a fixed part of the respective holder, e.g., can be made from the same piece of material (for example during molding of the casing in case of the first connection element). They can also be made separately and then fixedly attached to the holders.

The fixed holder and the moveable holder are aligned in a common attachment axis such that they can carry nuts which are connectable by a common bolt. For example, each holder has an opening for placing the nut and the openings are aligned in the attachment axis such that a bolt can pass through. In other words, the holders are shaped and located in such a way, that when a suitable nut is placed in each holder, a common bolt can be screwed into both nuts and the holders are thus connected by this bolt. The movement axis is parallel to the attachment axis, so that rotation of the bolt can be transformed by its thread into a translational movement of the moveable holder.

The movement of the moveable holder can thus regulate distance between the two holders, and this distance is parallel with the direction of bolt axis, when the bolt is threaded into the nuts carried by the holders. This distance regulation is what allows the tolerances in lamp position to be compensated by the present invention. Once the bolt is threaded into nuts in both holders, the nuts are preferably kept from moving relative to each other, and the moveable holder is thus also kept by the bolt at a fixed position relative to the fixed holder. The bolt thus keeps a desired distance between the two holders in the movement/attachment axis. Position between the holders in all other axes (e.g. the two other translation axes and the three rotation axes) is held by the connection elements.

The moveable holder comprises a contact surface for contacting a part of the vehicle during rotation of the common bolt. The contact surface faces away from the fixed holder. The contact surface can be for example a planar surface for contacting a planer part of the vehicle's body. It can also be curved or otherwise shaped, depending on the shape of the corresponding vehicle part. For a headlight or a taillight, the vehicle part can especially be a structural component of the vehicle, e.g., the body itself or another rigid component carried by the body. For example, a headlight can be attached, by the tolerance-compensation mechanism, to a metal sheet delimiting a front end of an engine space and extending above the headlight.

Using the tolerance-compensation attachment mechanism can for example occur in the following way:
During mounting of the lamp, possibly after the lamp is fixed by standard non-compensating bolted connection(s), a bolt is fixed into the tolerance-compensation attachment. Before the bolt is inserted, the movable holder can be at its position closest to the fixed bracket, for example at its downmost position. It can be at any other position delimited by the connection elements; the attachment process is not influenced by the position. A vehicle part - metal sheet with a hole for passing of the bolt, runs above the lamp. The common bolt is put through this hole and into a nut in the moveable holder. Rotation of the bolt, while to bolt is not pushed far enough to contact a nut in the fixed holder, drags the moveable holder upwards towards the vehicle part and/or drags the bolt down if there is space between the free end of the bolt and the fixed holder's nut.

The moveable holder is thus moved (i.e., carried upwards by its nut due to the bolt's rotation) until it comes into contact with the part of the vehicle. This contact prevents further upwards movement of the moveable holder and so further rotation of the bolt must move the bolt downwards. The end of the bolt is thus moved towards the nut in the fixed holder and once the bolt engages this nut, the position of the moveable holder becomes constant relative to the fixed holder. Further tightening of the bolt thus simply moves the bolt downwards through both nuts until the head of the bolt touches the part of the vehicle. The bolt is then tightened, and the part of the vehicle is squeezed between the moveable holder (its contact surface) and the bolt head. The bolt is also caught in the nut in the fixed holder and the bolt thus holds the lamp together with the vehicle part. Only the translational movement in the attachment axis needs to be fixed by the bolt, any other movement is prevented by the connection elements and the bolt thus does not have to be subjected to torsion or bending stress.

The present invention thus enables fixing of a lamp relative to a vehicle without changing their distance during tightening of the bolt. The at least one tolerance-compensation attachment mechanism thus provides additional strength or stability to the lamp's mounting to the vehicle, but it does not disturb the lamp's alignment, which can be provided by different attachments.

Thanks to the rigid connection elements which only allow the single axis movement, the attachment mechanism provides a stable connection between the lamp and the vehicle, and the common bolt used in the mechanism only needs to keep the lamp in its axis, i.e., it would only be subjected to axial tension. The two connection elements can be made as rigid, large and/or durable as needed for any specific application. E.g., a groove or a rail on the casing can easily be made as wide and thick as needed without significant change in manufacturing cost or complexity. The mechanism from the present invention is also easy to use and does not put any further requirements to vehicle-assembling workers.

Since the whole mechanism is a part of the lamp, the lamp manufacturer provides all the required nuts and can also provide the respective bolt(s). This is a very significant advantage when compared to some mechanisms from the state of the art where one of the nuts needs to be attached to the vehicle - one nut is then provided by lamp manufacturer while the other is provided by the vehicle manufacturer, which naturally requires additional coordination between the two manufacturers. The nuts used in the tolerance-compensation attachment mechanism can be smaller and/or cheaper because they are also only subjected to the axial tension.

The two connection elements also keep the two nuts aligned with any required precision so that extending the bolt through both nuts is easier. The connection elements can resist forces from the bolt-tightening better and thus won't become twisted during the tightening.

The at least one attachment mechanism can further comprise a perforable barrier for the common bolt, wherein the barrier is located between the fixed holder and the moveable holder, i.e., between the two nuts. The barrier can for example have a form of an opening, between the two holders, with a slightly smaller diameter than that of the bolt intended for the mechanism. It can alternatively or additionally be from a less rigid material than the holder(s) and casing, e.g., from rubber or silicone. The barrier serves for keeping the bolt from moving towards the fixed holder while the moveable holder moves towards the head of the bolt. It therefore prevents the bolt from engaging the nut in the fixed holder before the correct distance between the holders is reached. The barrier can be carried by the fixed holder or by another component. It might be advantageous to place the barrier at the fixed holder, to move the barrier as close to the fixed nut as possible.

If the bolt engaged the fixed nut sooner than required (before the moveable holder contacts the part of the vehicle), the distance between the two nuts becomes fixed and further tightening of the bolt could result in movement of the lamp towards the part of the vehicle and/or movement of the part towards the lamp. The perforable barrier provides a certain resistance, given by material and shape of the barrier. This resistance makes it easier to tighten the bolt correctly, i.e., to not engage the fixed nut before the moveable holder is in contact with the vehicle part. After the contact, the moveable holder can no longer move. Further tightening of the bolt thus cannot move the moveable nut and thus the bolt is forced to move axially towards the fixed nut. The tightening force is thus converted into axial force which pushes the bolt through the barrier.

Without the barrier, the correct tightening can still be achieved, e.g., by an operator who makes sure that the bolt does not engage the fixed nut sooner than needed. The barrier however significantly simplifies the bolt tightening and reduces requirements on assembly workers. It is also possible to provide similar barrier not between the holders but between the head of the bolt and the part of the vehicle.

The perforable barrier can be a part of the fixed holder, as described above. For example, the fixed holder can have additional bracket which carries the barrier aligned with the fixed nut. For example, this bracket can have a through hole large enough for the common bolt to pass through. This is then at least partially closed by the barrier, e.g., the barrier can be one or more radial protrusions on the edge of the hole, it can be a layer of flexible or thinner or otherwise deformable material placed over the hole, etc.

The fixed holder can comprise a nut and the moveable holder can also comprise a nut, wherein both nuts have the same size and orientation of thread. The nuts can be removable or can be a fixed part of the holders. If they are placed in the holders beforehand, i.e., when the lamp is manufactured, mounting of the lamp into a vehicle is simplified because the assembly workers do not have to obtain the needed nuts and place them in the holders. It might however complicate changing the nuts, e.g., if a larger thread is needed. Having removable nuts thus also has its advantages.

The first connection element and the second connection element can be made from plastic. Plastic materials are relatively cheap and easy to shape, e.g., by pressing and/or molding. Since a lamp casing is usually from plastic, e.g., polypropylene, the first element can then be from the same piece of material as the casing. The plastic elements can be made relatively thick/wide, since they are on the outside of the lamp, so the linear movement of the moveable holder and resistance to rotation or movement in other directions can be achieved by size of the elements. The plastic elements can be provided with parts form other materials (especially metals), e.g., as reinforcements, connecting elements, sliding contact surfaces, wheels, etc., to improve the durability and rigidity of the moveable connection.

It is, for example, also possible to make the connection elements from metal. This might be advantageous especially if there is only a limited space on the outside of the lamp and/or if more rigidity than what can be provided by plastic elements is needed.

The first connection element can be a rail, and the second connection element is then shaped complementarily to the rail and is slidingly attached to the rail. The rail can for example have a form of a groove, such as a T-shaped groove, and the second connection element can then have complementary cross-section, such as a T-shaped cross-section. The rail can also serve as a place for wheels if the movement is delimited by wheels. The rail can also be a protruding rail, with the second connection element being attached over the protruding rail.

As described above, it is then also possible to exchange the rail with the complementary element, such that the second connection element is a rail.

### Description of drawings

A summary of the invention is further described by means of exemplary embodiments thereof, which are described with reference to the accompanying drawings, in which:
- Fig 1.: Shows, in drawings 1A to 1D, a front view of an attachment mechanism of a first exemplary embodiment of the vehicle lamp with a tolerance-compensation attachment mechanism according to the invention, in different states during lamp assembly.
- Fig 2.: Shows a detailed view of the attachment mechanism from fig. 1A, wherein in this state, a moveable holder of the mechanism is at its closest to a fixed holder of the mechanism, and a common bolt for connecting nuts in both mechanisms is not yet through a part of the vehicle, which is to be connected with the lamp via the mechanism, nor through any of two nuts placed in the two holders.
- Fig 3.: Shows a detailed view of the attachment mechanism from fig. 1B, wherein in this state, the bolt is through the part of the vehicle and the nut of the moveable holder, and the free end of the bolt is temporarily stopped by a perforable barrier carried by the fixed holder between the two nuts.
- Fig 4.: Shows a detailed view of the attachment mechanism from fig. 1C, wherein in this state, the moveable holder is at its farthest from the fixed holder and the bolt is still held by the barrier. A contact surface of the moveable holder is pressed against the part of the vehicle in this state.
- Fig 5.: Shows a detailed view of the attachment mechanism from fig. 1D, wherein in this state, the bolt is completely tightened, it engages the nut in the fixed holder, and the part of the vehicle is firmly held and fixed between the moveable holder and a head of the bolt. The barrier was destroyed or pushed aside between this state and the previous one.

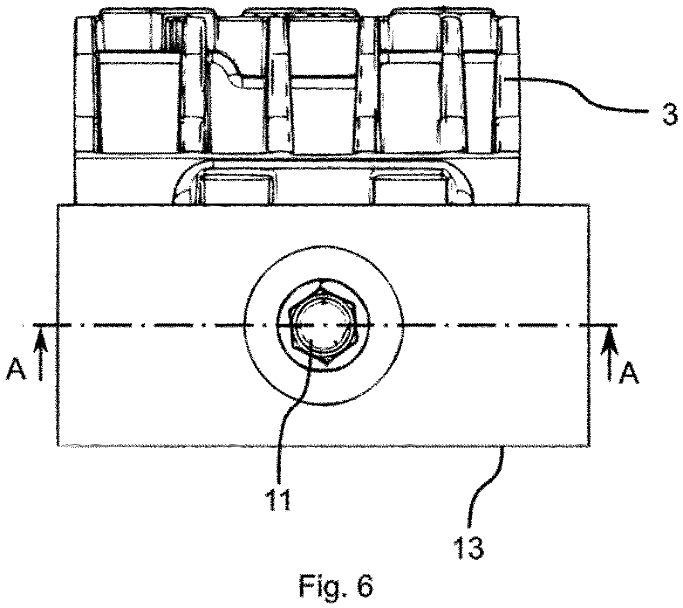

- Fig 6.: Shows a top view of the mechanism from figs. 1-5.
- Fig 7.: Shows a sectional view of the mechanism from fig. 5, wherein plane A-A of the section, marked in fig. 6, passes through the axis of the bolt. In this figure, it can be seen how the bolt passes through the moveable holder and the barrier into the fixed holder, and how movement be-tween the two holders is prevented in the final state of the attachment mechanism.
- Fig 8.: Shows a schematical top view of the attachment mechanism according to the first embodiment, wherein a shape of connection elements which delimit translational movement of the moveable holder in one axis and prevent movement in/around any other axis is shown by this figure.
- Fig 9.: Shows a schematical front view of an automobile provided with two lamps according to the first embodiment, wherein the lamps are head-lights which are properly aligned with respect to each other and a with respect to a front grille.

### Exemplary Embodiments of the Invention

The invention will be further described by means of exemplary embodiments with reference to the respective drawings.

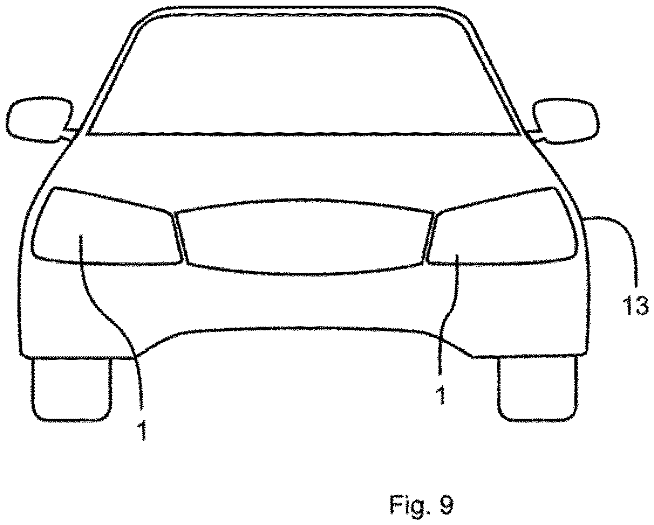

A first embodiment of the vehicle lamp 1 with a tolerance-compensation attachment mechanism 2 is a headlight which comprises several illumination modules and a casing 3 which encloses the modules and facilitates mounting of the headlight to an automobile. Each of the modules comprises its own casing, lens, light sources etc. The casing 3 is made from black plastic and its open front side is covered by a transparent cover lens. The casing 3 comprises three standard bolted joints which connect the headlight to the automobile's body. It further comprises one tolerance-compensation attachment mechanism 2, which strengthens the headlight's connection to the automobile without affecting its alignment. The alignment is provided by the standard joints which are tightened before the attachment mechanism 2. The connection via the standard joints might require some individual alignment for each lamp 1 depending on manufacturing imprecisions and tolerances, which is done by assembly workers when the headlight is being mounted to the body. The lamp 1 is thus in a correct, desired position with respect to the automobile body, to the other headlight, to a front grille (see fig. 9) etc. This mounting and alignments are known to skilled persons.

The tolerance-compensation attachment mechanism 2 comprises two holders for holding a nut 5, wherein the connecting between the lamp 1 and the automobile via this mechanism is done by tightening a bolt 11 which passes through a part 13 of the vehicle (in this embodiment a metal sheet which is a part of the body of the vehicle, which is an automobile, and passes above the headlight along the width of the automobile) and then through both the nuts 5.

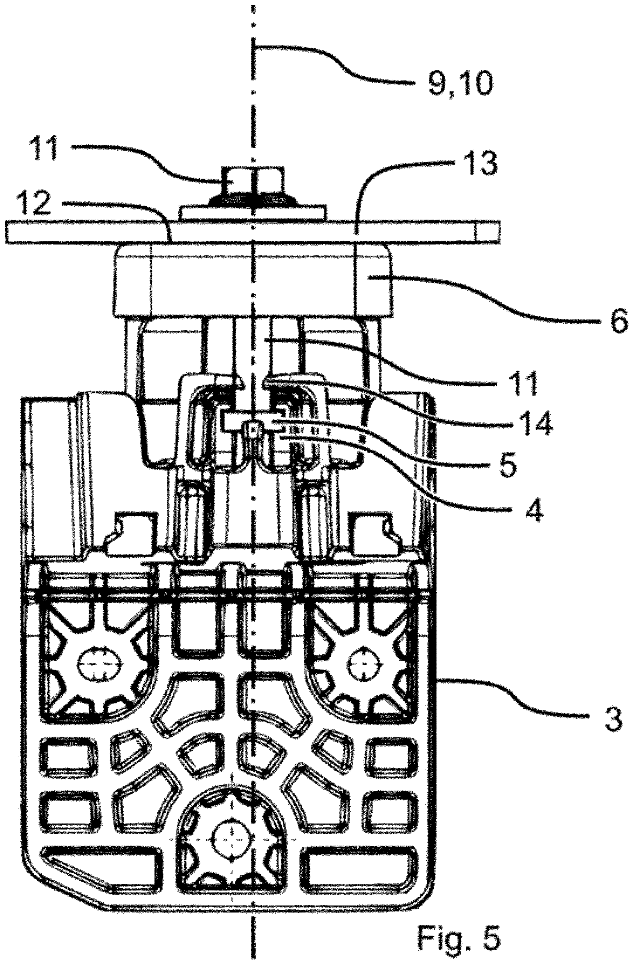

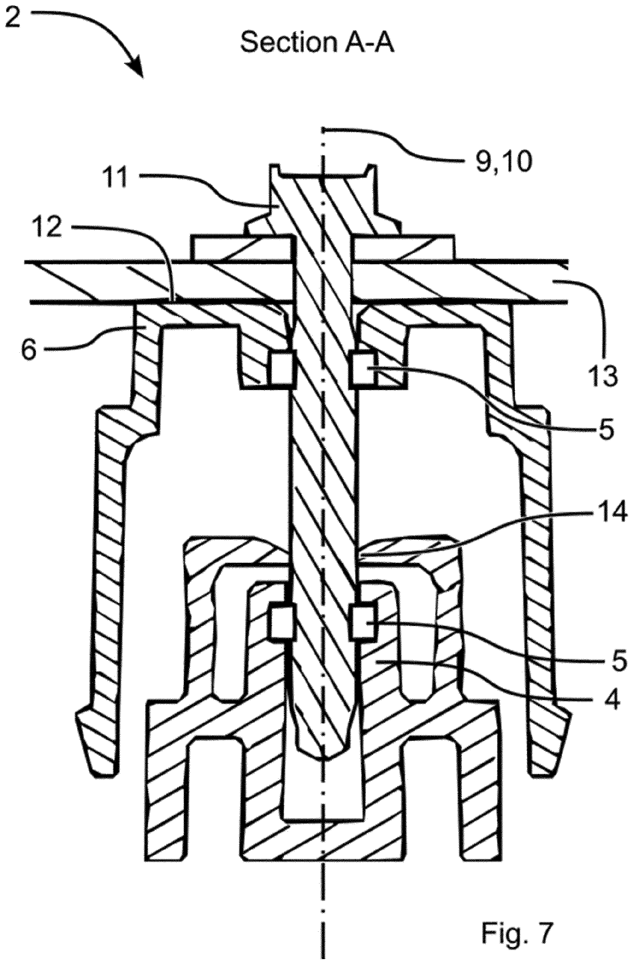

A fixed holder 4 is firmly fixed to the casing 3, in this embodiment it is formed together with the casing 3 from the same piece of material during the same plastic-moulding process. The fixed holder 4 can best be seen in fig. 7. The fixed holder 4 in this embodiment comprises a cylindrical main part with a coaxial opening for receiving the bolt 11. This opening has a widened portion for receiving the nut 5. The main part is connected to the casing 3 at its lower half (see e.g., fig. 5). The fixed holder 4 further comprises two upper branches which extend above the opening for the bolt 11 where they form a barrier 14. The barrier 14 serves for stopping the bolt 11, or more precisely to provide a resistance for the bolt 11, before it can reach the nut 5 in the fixed holder 4, as will be described in more detail below. The barrier 14 in this embodiment is thus from the same material as the casing 3 and the fixed holder 4 and is formed as an aperture, between the two upper branches of the holder, wherein the aperture is narrower than diameter of the bolt 11.

A moveable holder 6 is placed above the fixed holder 4 and below the part 13 of the vehicle. It is connected to the casing 3 via two connection elements which delimit its movement. The movement is a single axis translational movement, i.e., the moveable holder 6 can be moved up and down, but it cannot be rotated or shifted in another direction than up and down (at least not without expending a significant amount of force which would destroy the elements, and which does not standardly occur during the assembly or during vehicle operation. The lamp can however be attached (by the standard joints as well as by the attachment mechanism 2) such that its connection to the vehicle can be broken during impact as a part of pedestrian-protection means of the vehicle).

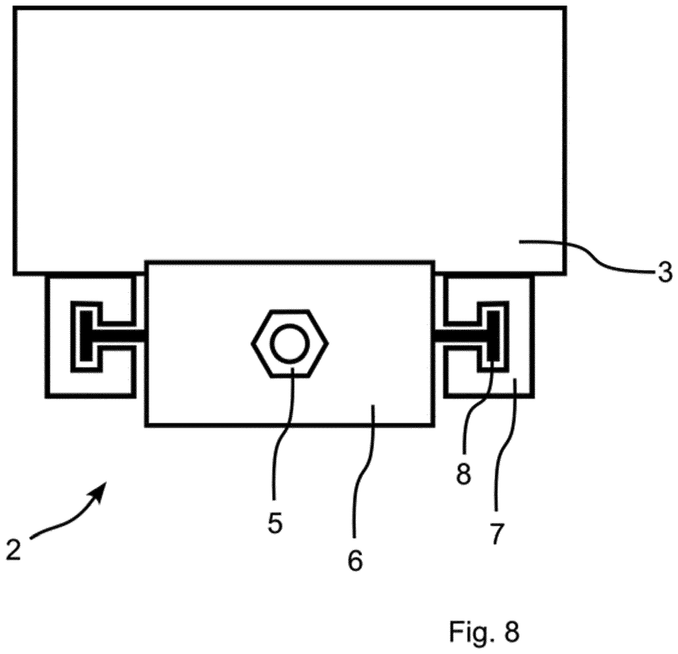

A first connection element 7 is a groove with a T-shaped cross-section. The groove has its length in the direction of a movement axis 9, i.e., up and down. The first connection element 7 is a part of the casing 3, i.e., the groove is a shaped portion of an outer surface of the casing 3. The groove serves as a guiding element (i.e., a rail) for the second connection element 8, which is a T-shaped protrusion slidingly attached in the groove (see fig. 8). The second connection element 8 is a fixed part of the moveable holder 6 - the holder and the element are made from a single piece of moulded plastic. In this embodiment, there are two first connection elements 7 and two second connection elements 8 for the attachment mechanism 2, i.e., the moveable holder 6 has one sliding connection on each lateral side.

The connection elements are made sturdy enough to withstand standard forces occurring during mounting (especially a torsional moment from a bolt-tightener) - in this embodiment, the T-protrusion has each of its three branches one centimetre wide and two centimetres thick. The groove has slightly larger dimensions to accommodate the protrusion slidingly without enabling it too much movement in/around other axis than the single movement axis 9.

The two pairs of connection elements thus define a sliding single-axis movement relative to the casing 3 for the moveable holder 6. The holder is inserted into the grooves from above and, in this embodiment, could be removed from the grooves as long as the headlight is not in the automobile where the part 13 of the vehicle prevents this removal as it blocks the holder from above. The movement has a range of 10 cm in this embodiment, i.e., the moveable holder 6 can be moved 10 cm up before it would leave the grooves.

The movement axis 9 is parallel to an attachment axis 10, i.e., to the axis of the bolt 11 when it is engaged with both nuts 5. The moveable holder 6 can then be pulled up as a result of rotation of the bolt 11 when it is engaged in the movable holder's 6 nut 5 and not engaged in the fixed holder's 4 nut 5. The purpose of the above-mentioned barrier 14 is to keep the bolt 11 from easily engaging the fixed nut 5 - certain force must be used to push the bolt 11 through the barrier 14. As a result, rotation of the bolt 11 in the tightening direction when the bolt 11 is in the moveable nut 5 and its free end rests on the barrier 14 tends to lift the moveable holder 6 until it reaches the part 13 of the vehicle.

The two nuts 5, which have the same construction, and the common bolt 11 for engaging the nuts 5, are a part of the attachment mechanism 2 in this embodiment. There is also a washer between the screw head and the vehicle part.

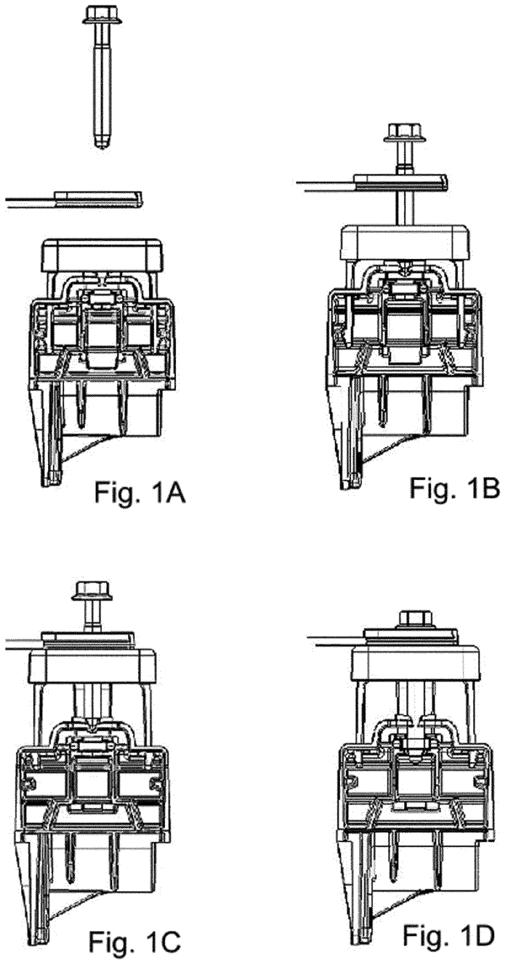

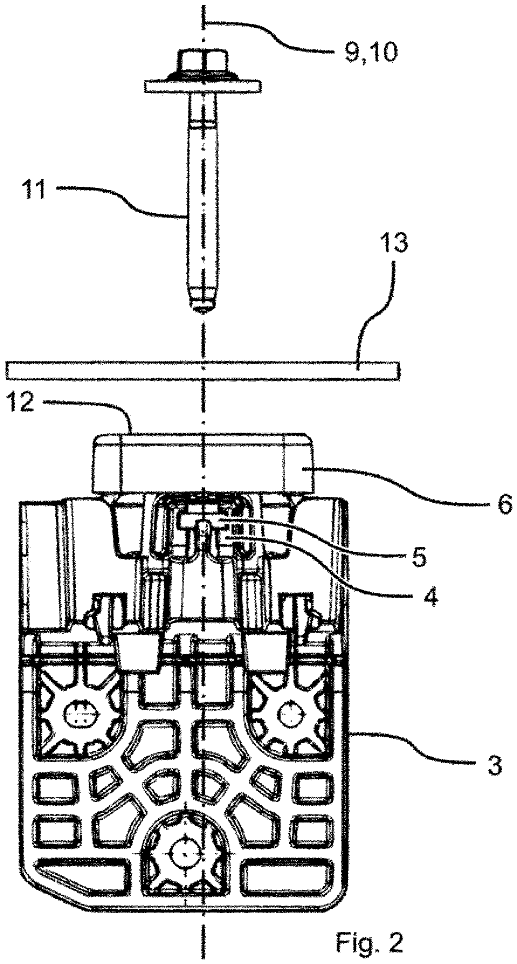

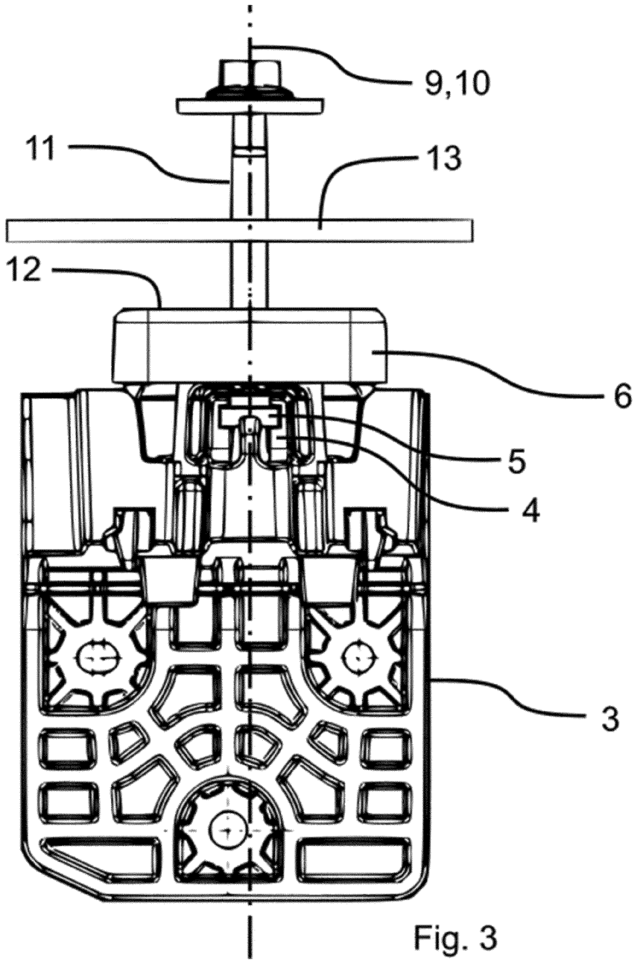

The process of tightening the attachment mechanism 2 is depicted in figs. 1A to 1D, with more detailed views of these figures shown in figs. 2 to 5. Firstly, the bolt 11 is inserted through the washer, the opening in the part 13 of the vehicle and the space between the part 13 of the vehicle and the moveable holder 6, which is moved down by gravity at this point. Once the bolt 11 is inserted through the opening in the part 13 of the vehicle and it engages the moveable nut 5, the bolt 11 can move further down only while rotating and only until it reaches the barrier 14. Further free movement of the bolt 11 in the attachment axis 10 direction is restricted by the barrier 14 (see fig. 1B and fig. 3) and thus rotating of the bolt 11 results in upwards movement of the moveable holder 6.

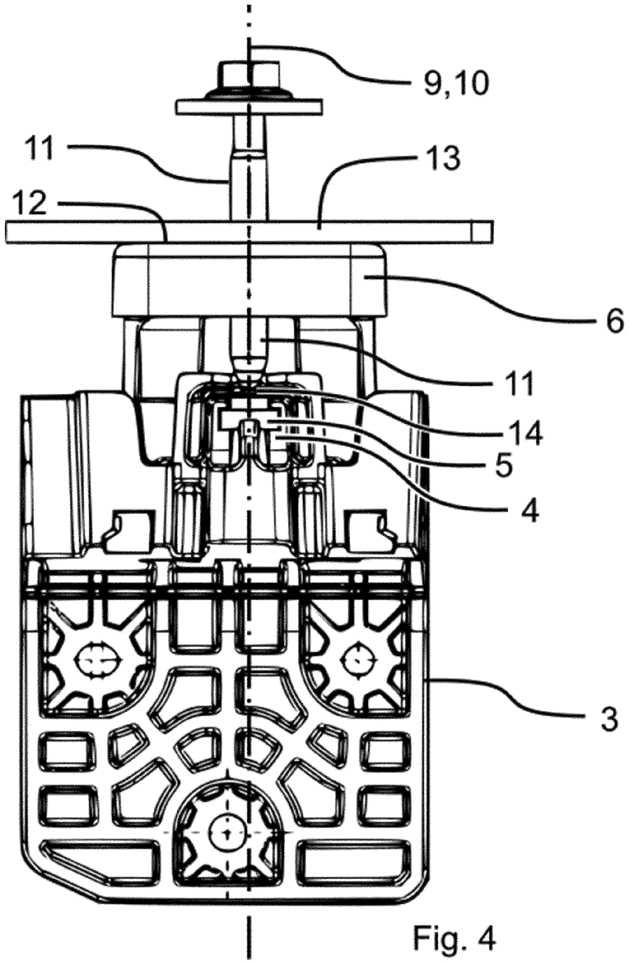

The bolt 11 is thus braced against the barrier 14 and its rotation is converted by its thread into upwards movement of the moveable holder 6 - enabling this movement is the reason for having the holder moveably connected via the connection elements. The upper side of the moveable holder 6 forms a flat contact surface 12 for pressing against the bottom surface of the part 13 of the vehicle. When the moveable holder 6 reaches the part 13 of the vehicle, further upwards movement of the holder is prevented (fig. 1C and fig. 4). Further rotation of the bolt 11 (still in the same tightening direction) thus creates tension between the barrier 14 and the part 13 of the vehicle. The barrier 14 is made to be perforable, such that it gives way at this point - the two brackets forming it get pushed away from each other and the bolt 11 can pass between them, without any movement between the casing 3 and the part 13 of the vehicle.

The bolt 11 can thus move further downwards, engage the fixed nut 5 carried by the fixed holder 4 and then be finally tightened until the part 13 of the vehicle is pressed between the head of the bolt 11 and the moveable holder 6 (fig. 1D and fig. 5). At this point, the attachment mechanism 2 firmly connects the casing 3 to the vehicle - movement between them in the attachment axis 10 and movement axis 9 is restricted by the bolt 11 itself. Movement in other directions and any rotation are restricted by the connection elements. This further connection is firmly tightened but did not move the casing 3 relative to the part 13 of the vehicle, so the lamp 1 remains properly aligned, the same as it was before the tolerance-compensation attachment mechanism 2 started being tightened.

### Alternative embodiments:

In other embodiments, the lamp 1 can be a taillight or a different type of vehicle lamp 1. The lamp 1 can alternatively comprise multiple tolerance-compensation attachment mechanisms 2. The connection elements can alternatively by a different type of elements usable for defining a translational movement, e.g., a protruding rail on one holder and a sliding element surrounding part of the rail on the other holder, two or more telescopic rails placed one in another, sliding rod on one holder located in an opening in the other holder etc.

Any or both of the holders can alternatively be made from metal or from a different material. The fixed holder 4 can alternatively also be from plastic but not from the same piece of material as the casing 3 and can e.g., be welded or screwed to the casing 3. Similarly, the connection elements can be from different materials and can be attached to their respective holders by any different kind of connection.

The barrier 14 can also be formed differently, e.g., from a different material, with a different shape etc. Any element which can provide some resistance to the movement of the screw and can be perforated after the moveable holder 6 contacted the part 13 of the vehicle, can be used as the barrier 14. The barrier 14 can be a part of the casing 3 without being a part of the fixed holder 4 in some embodiments.

In alternative embodiments, the attachment mechanism 2 can be differently oriented. I.e., the movement axis 9 can have any orientation instead of the vertical one from the first embodiment. The moveable holder 6 is still moveable in the attachment axis 10 and moves between the fixed holder 4 and the corresponding part 13 of the vehicle.

A single pair of connection elements can be used for delimiting the translational movement of the attachment mechanism 2 in some embodiments.

A vehicle, especially an automobile, comprising one or more lamps according to the invention, e.g., as described in any of the above-mentioned embodiments, is another exemplary embodiment of the invention. For example, an automobile with two headlights, each comprising at least one tolerance-compensation attachment mechanism 2 with the moveable holder 6, is an advantageous embodiment of the invention.

Further adaptations and modifications of the embodiments described above may be accomplished by one of ordinary skill in the art without departing from the scope of the present invention.

### Reference list

- 1.: Lamp
- 2.: Attachment mechanism
- 3.: Casing
- 4.: Fixed holder
- 5.: Nut
- 6.: Moveable holder
- 7.: First connection element
- 8.: Second connection element
- 9.: Movement axis
- 10.: Attachment axis
- 11.: Bolt
- 12.: Contact surface
- 13.: Part of the vehicle
- 14.: Barrier

## Claims

1. Vehicle lamp (1) with a tolerance-compensation attachment mechanism (2), the lamp (1) comprising a casing (3) for mounting the lamp (1) to a vehicle, wherein the casing (3) comprises at least one attachment mechanism (2), **characterized in that**
• the attachment mechanism (2) comprises a fixed holder (4) for a nut (5) and a moveable holder (6) for a nut (5),
• wherein the fixed holder (4) is fixedly connected to the casing (3) and the moveable holder (6) is connected to the casing (3) via two connection elements,
• wherein a first connection element (7) is fixedly connected to the casing (3) and a second connection element (8) is fixedly connected to the moveable holder (6), wherein the first connection element (7) and the second connection element (8) are moveably connected to each other, such that they define a non-rotatable translational movement in a single movement axis (9),
• wherein the fixed holder (4) and the moveable holder (6) are aligned in a common attachment axis (10) for carrying nuts (5) connectable by a common bolt (11), wherein the movement axis (9) is parallel to the attachment axis (10),
• wherein the moveable holder (6) comprises a contact surface (12) for contacting a part (13) of the vehicle during rotation of the common bolt (11), wherein the contact surface (12) faces away from the fixed holder (4).

2. The vehicle lamp (1) according to claim 1 **wherein** the at least one attachment mechanism (2) further comprises a perforable barrier (14) for the common bolt (11), wherein the barrier (14) is located between the fixed holder (4) and the moveable holder (6).

3. The vehicle lamp (1) according to claim 2 **wherein** perforable barrier (14) is a part of the fixed holder (4).

4. The vehicle lamp (1) according to any preceding claim **wherein** the fixed holder (4) comprises a nut (5) and the moveable holder (6) comprises a nut (5), wherein both nuts (5) have the same size and orientation of thread.

5. The vehicle lamp (1) according to any preceding claim **wherein** the casing (3), the first connection element (7) and the second connection element (8) are made from plastic.

6. The vehicle lamp (1) according to any preceding claim **wherein** the first connection element (7) is a rail, and the second connection element (8) is shaped complementarily to the rail and is slidingly attached to the rail.
